# EUROPEAN PATENT SPECIFICATION

(11) **EP 2 231 490 B1**
(45) Date of publication and mention of the grant of the patent: **15.05.2013**
(21) Application number: 08859489.0
(22) Date of filing: 10.12.2008
(51) Int. Cl.: B32B 27/08, B32B 27/34, B32B 27/36, B65B 25/22, B65D 81/20, B65B 25/06, B65D 81/34, B32B 25/08

(54) **HIGH-TEMPERATURE PACKAGING OF BONE IN MEAT PRODUCT**
HOCHTEMPERATURVERPACKUNG FÜR NICHT ENTBEINTES FLEISCHPRODUKT
CONDITIONNEMENT A TEMPERATURE ELEVEE D'OS DANS UN PRODUIT DE VIANDE

(30) Priority: 11.12.2007 US 7226
(43) Date of publication of application: 29.09.2010
(73) Proprietor: M&Q IP Leasing, Inc., Wilmington, DE 19801 (US)
(72) Inventor: RUBINSTEIN, Curtis, Anderson, SC 29621-7649 (US)
(74) Representative: Klunker . Schmitt-Nilson . Hirsch
(86) International application number: PCT/US2008/086173
(87) International publication number: WO 2009/076409

(56) References cited:
- US-A1- 2004 121 054
- US-A1- 2005 118 315
- US-A1- 2005 282 025
- US-A1- 2007 077 378
- US-A1- 2007 134 382

## Description

The present invention relates generally to methods for preparing bone in meat products in a reduced cook cycle using high-temperature cook-in bags. This technology is particularly well suited, but by no means limited, for preparing ribbed meat products in a reduced cook cycle. Such cook-in bags are known from e.g. US 2007/0077378 and 2007/0134382.

### BACKGROUND

Bone in meat products, including, for example, ribbed meat products, are traditionally cooked in a two step process. First, the bone in meat is rendered to loosen the meat from the bone and to melt away portions of the fat. Following rendering, the bone in meat is put onto a grill, or some other cooking appliance, to enhance the appearance and flavor of the meat, and to optionally caramelize a sauce on top of the bone in meat.

Rendering is usually performed by boiling or roasting the bone in meat product. Various problems are associated with these traditional techniques. These problems exist on both a consumer level, such as a single end user or a food service facility including restaurants, schools, institutions, etc., and a producer level. On the consumer level, the consumer is forced to choose between a flavorful meat or a short cook time. For example, if the consumer decides to choose a flavorful meat, the meat must be rendered by slow roasting in an oven at a low temperature. The rendering process is extremely time consuming because very low temperatures must be employed (i.e. 200°F to 250°F) to ensure that the ribs remain moist and tender. If a higher temperature is used to decrease the process time, the meat becomes dry, tough, and sticks to the bone. As such, rendering ribs by roasting in an oven at 200° to 250°F usually takes between about 3 and 4 hours.

If the consumer chooses a quicker method, such as boiling the bone in meat products, flavor must be sacrificed. In the boiling method, the bone in meat is submerged into a pot of boiling water until the bone in meat is sufficiently rendered. Although this technique is considerably quicker than slow roasting, much of the flavor of the meat is lost in the boiling water, resulting is a less flavorful end product.

These consumer problems lead further to market disadvantages for meat producers. For example, because few consumers have the time to properly prepare ribbed meat products, the market for these products is small. As such, meat producers usually view ribbed meat products as waste products. Producers usually package and sell only a portion of the ribbed meat products and the remaining supply is discarded once all easily boned meat is removed. Accordingly, a method to prepare bone in meat products, for example ribbed meat products, in a way that reduces the cook time, and that does not diminish taste, would be desirable to both consumers and producers.

### SUMMARY

One aspect of the present invention concerns methods for preparing a ribbed meat product in a reduced cook cycle comprising: placing, at a processor facility, an uncooked ribbed meat product into a high-temperature cook-in bag suitable for high-temperature cooking processes that occur at temperatures greater than about 350°F; evacuating air from an inside of the cook-in bag; providing an oxygen and water vapor barrier to maintain shelf life of the uncooked ribbed meat product contained within the cook-in bag; and hermetically and vacuum sealing the high-temperature cook-in bag to create a contained package containing the uncooked ribbed meat product. The cook-in bag comprises a multilayer film, where an inner layer of which does not substantially adhere to the bone-in meat product and consists of polyester elastomer or polyamide elastomer The high-temperature cook-in bag containing the uncooked ribbed meat product may be placed directly into an oven. The contained package may be exposed to a temperature greater than about 350°F thus reducing the cook time necessary to render the ribbed meat product by a factor of about 3 as compared to conventional low temperature cooking processes. In certain embodiments, the cook cycle may comprise a time period of about 1 hour.

The methods may further comprise freezing the contained package to produce a frozen contained package, wherein the frozen contained package is suitable for direct placement into a high-temperature cooking apparatus. The cooking apparatus may be an oven having a temperature setting of greater than about 350°F.

The multi-layered film comprises an outer layer and an inner layer. The multi-layer may further comprise a tie layer between the outer layer and inner layer.

Methods of the present invention may further comprise preparing the uncooked ribbed meat product prior to placing the uncooked ribbed product into the high-temperature cook-in bag. Preparing may comprise tenderizing, seasoning, marinating and/or a combination thereof.

Methods may further comprise reducing the likelihood of contamination of the ribbed meat product and/or transfer of bacteria from the ribbed meat product to humans by fully containing the ribbed meat product within the high-temperature cook-in bag from placement of the ribbed meat product in the cook-in bag at the processor facility until after rendering of the ribbed meat product in a high-temperature apparatus. In one embodiment, the methods may comprise retaining moisture and flavor of the ribbed meat product by containing the juices from the ribbed meat product within the contained package.

In one embodiment, the methods may comprise venting of the high-temperature cook-in bag. The methods may further comprise hermetically sealing the contained package under vacuum. The high-temperature cooking bags utilized in the methods of the present invention may have a tear resistance of greater than about 50 g/ mil to reduce tearing or puncturing of the cook-in bag by the ribbed meat product during transportation of the contained package.

Another aspect of the present invention concerns methods for preparing a ribbed food product in a reduced cook cycle comprising: placing, at a processor facility, a substantially fully cooked ribbed meat product into a high-temperature cook-in bag suitable for high-temperature processes that occur at temperatures greater than about 350°F; providing an oxygen barrier to maintain shelf life; and hermetically sealing the high-temperature cook-in bag to create a contained package containing the substantially fully cooked ribbed meat product. The contained package may be exposed to a temperature greater than about 350°F, thus reducing the cook time necessary to rethermalize the ribbed meat product. The cooked ribbed meat product may be prepared prior to placing the cooked ribbed product into the high-temperature cook-in bag. The methods may further comprise freezing the contained package to produce a frozen contained package, wherein the frozen contained package is suitable for direct placement into a high-temperature cooking source. The contained package of the current methods may be hermetically sealed under vacuum. Further, methods may comprise transporting the contained package.

Another aspect of the present invention may comprise methods for preparing a ribbed food product in a reduced cook cycle comprising: placing an uncooked ribbed food product into a high-temperature cook-in bag; closing the high-temperature cook-in bag to create a sealed package comprising the uncooked ribbed food product; and reducing the cook time to render the ribbed food product by exposing the sealed package to a temperature greater than about 350°F. The cook cycle may comprise about 1 hour. Further, the cook cycle may be reduced by a factor of three over conventional rendering methods. The current methods may provide for the juices from the ribbed meat product to remain within the sealed package, thereby retaining moisture and flavor of the ribbed meat product.

Methods of the present invention may convert the rendering of bone in meat products from a low temperature, long cook cycle process into a high-temperature short cook cycle process, essentially turning bone in meat products into a convenience food.

### BRIEF DESCRIPTION OF THE DRAWINGS

The foregoing and other aspects of the present invention will become apparent from the following detailed description of the invention when considered in conjunction with the accompanying drawings. For the purpose of illustrating the invention, there is shown in the drawings embodiments that are presently preferred, it being understood, however, that the invention is not limited to the specific instrumentalities disclosed. In the drawings:

FIGs. 1A and 1B are top and side views, respectively, of an exemplary contained package comprising a high-temperature cook-in bag and a ribbed meat product;

FIG. 1C is a side view of an exemplary contained package comprising a high-temperature cook-in bag and a ribbed meat product, under vacuum;

FiGs. 2A and 2B are top and side views, respectively, of an exemplary high-temperature cook-in bag used to prepare a ribbed meat product;

FIGs. 3A and 3B are top and side views, respectively, of an exemplary high-temperature cook-in bag with a ribbed meat placed within;

FIG. 4 is a cross section view of an blended monolayer film that is not part of the present invention but may be used in the formation of a high-temperature cook-in bag for preparing ribbed meat products in a reduced cooking cycle;

FIG. 5 is a cross sectional view of an exemplary multilayer film comprising two layers that may be used in the formation of a high-temperature cook-in bag for preparing ribbed meat products in a reduced cooking cycle;

FIG. 6 is a cross sectional view of an exemplary multilayer film comprising three layers that may be used in the formation of a high-temperature cook-in bag for preparing ribbed meat products in a reduced cooking cycle;

FIGs. 7A and 7B are top and side views, respectively, of an exemplary method for packaging and preparing a ribbed meat product; and

FIG. 8 is a side view schematic of an exemplary process for making high-temperature cook-in bags that may be used in the methods of the present invention.

### DETAILED DESCRIPTION OF ILLUSTRATIVE EMBODIMENTS

The present invention is directed to methods for the preparation of bone in meat products in a reduced cook cycle. Bone in meats, may include for example, fowl, fish, lamb, pork, beef, among others. Suitable bone in meat products may include hams, pork shoulders, etc. The present invention is particularly well-suited for preparing ribbed meat products. Suitable ribbed meat products can include, for example, pork and beef products including rib roasts, pork chops, spareribs, baby back ribs, St. Louis style spareribs, country style spareribs, Kansas City style ribs, riblets, rib tips, and the like.

As used herein, a cook cycle may be defined as the period of time required to at least substantially cook a bone in meat product, render a bone in meat product, or reheat a bone in meat product. The methods of the present invention provide several advantages over current methods to prepare bone in meat products. For example, cooking cycles required to render ribbed meat products using the methods of the present invention are dramatically reduced. In some embodiments, the cooking cycle to render the ribbed meat product is reduced by a factor of three. In other embodiments, the cooking cycle to render the ribbed meat product is less than about one hour. The reduced cook cycle afforded by the high-temperature cook-in bag provides a marked advantage over conventional low temperature methods of cooking ribbed meat products, which typically take place at 200°F to 250°F and take as long as 3-4 hours or more.

Other benefits of the present invention include increased flavor associated with the cooked bone in meat product, retained moisture during the cooking process, lower risk of cross-contamination between the bone in meat product and humans, and easier cleanup after the cooking process is complete. These benefits are afforded through the placement of bone in meat products, such as ribbed meat products, into high-temperature cook-in bags and subsequently sealing the high-temperature cook-in bags to form a contained package. The high-temperature cook-in bags may be any type of enclosure, container, package, pouch, rollstock, tube, form-fill-seal films, etc., suitable for receiving bone in meat products.

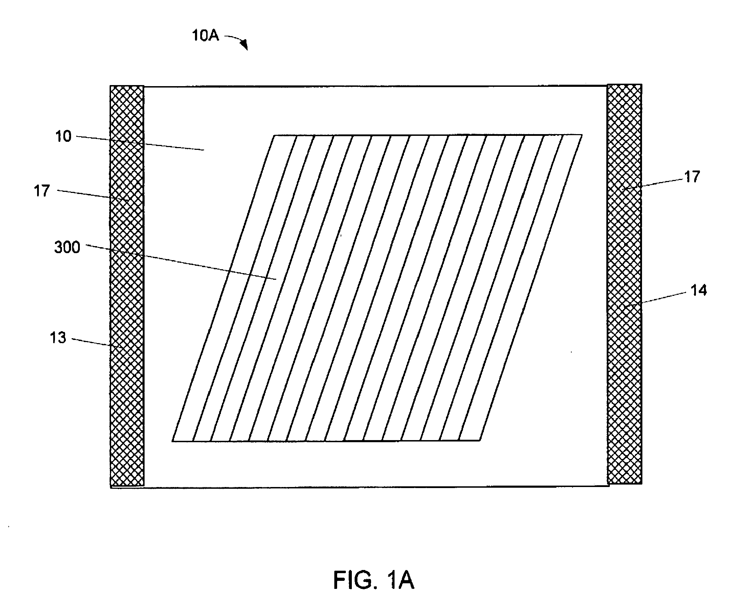

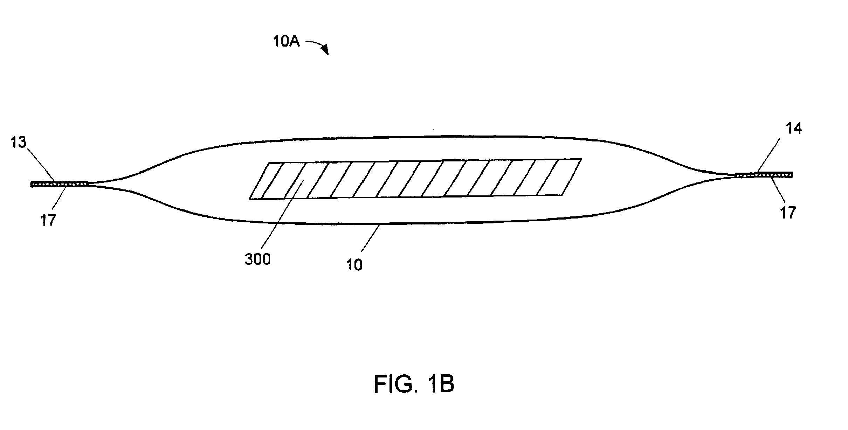

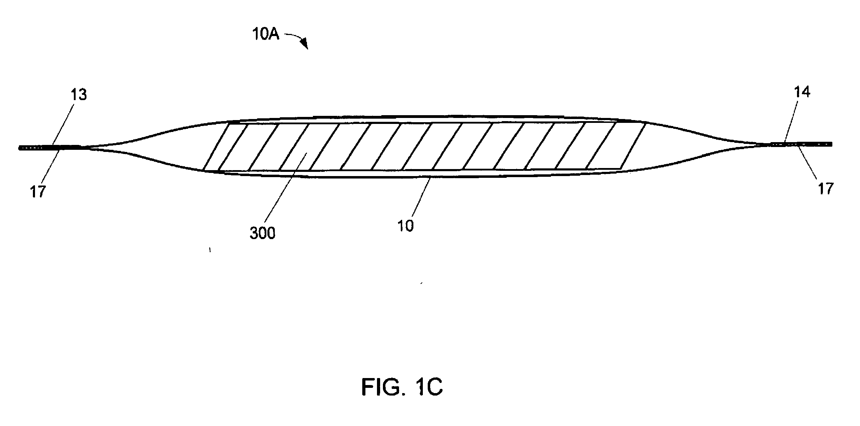

FiGs. 1A and 1B are top and side views, respectively, of a contained package 10A having an exemplary high-temperature cook-in bag 10. As shown in FIGs. 1A and 1B, the contained package 10A may include the high-temperature cook-in bag 10 with a ribbed meat product 300 disposed therein. The high-temperature cook-in bag 10 may include ends 13, 14, which may be closed or sealed after the ribbed meat product is disposed in the high-temperature cook-in bag 10. FIG. 1C is a side view of the contained packaged 10A sealed under vacuum, which may improve the shelf-life of the ribbed meat product 300.

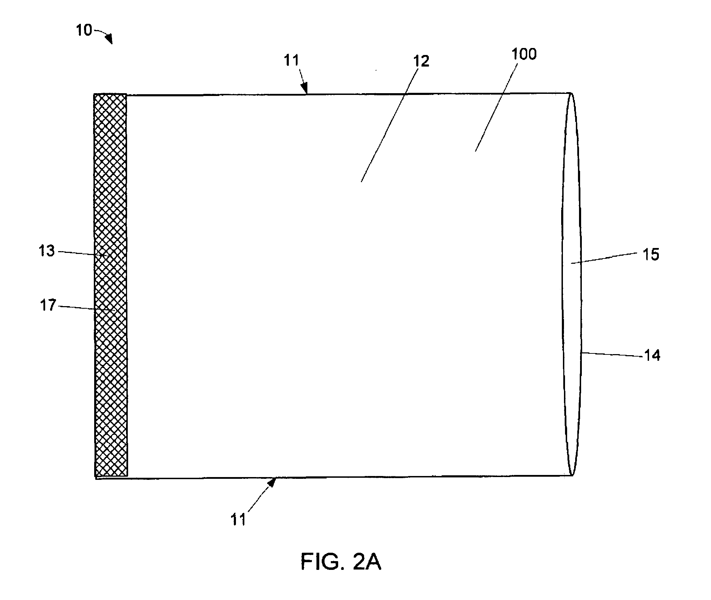

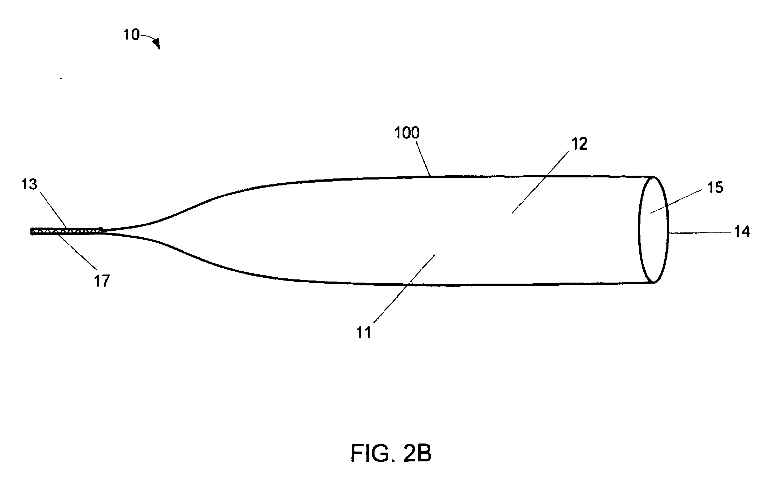

FiGs. 2A and 2B are top and side views, respectively, of the high-temperature cook-in bag 10 prior to insertion of the ribbed meat product 300. The high-temperature cook-in bag 10 may be comprised of a high-temperature film 100, and may include at least one side wall 11 and the ends 13, 14. The high-temperature cook-in bag 10 may define a cavity 12. As shown in FIG. 2B, the end 13 of the high-temperature cook-in bag 10 may be closed and the end 14 of the high-temperature cook-in bag 10 may define an opening 15 into the cavity 12 for receiving the ribbed meat product 300.

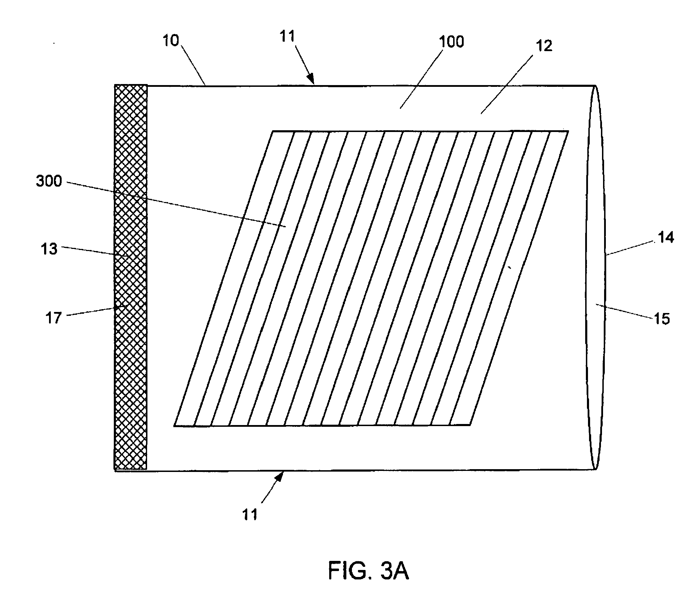

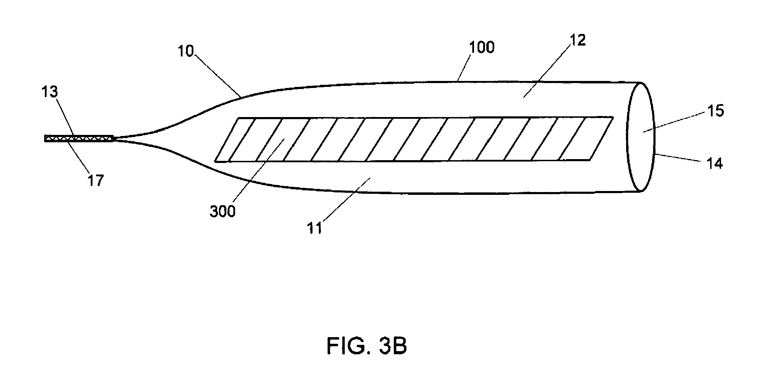

FIGs. 3A and 3B are top and side views, respectively, of the high-temperature cook-in bag 10 with the ribbed meat product 300 inserted in the cavity 12 through the opening 15. After the ribbed meat product 300 is inserted into the cavity 12, the end 14 may be closed to form a contained package 10A that includes the ribbed meat product 300. For example, opening 15 may be closed using a seal 17, such as a heat seal. In certain embodiments, the air inside the bag may be evacuated during the sealing process, as shown in FIG. 1C for example.

As used herein, high-temperature may refer to temperatures greater than about 350°F. The high-temperature cook-in bag 10 utilized in the present invention comprises multilayer films comprising materials that can withstand high-temperatures and may also have other beneficial properties such as the ability to be readily heat sealed, durability, good moisture barrier properties, and/or good gas barrier properties. Suitable films for use with embodiments of the present invention are described in United States Provisional Patent Application No. 60/973,961, filed on September 20, 2007, and Unites States Patent Application No. 12/233,319, filed on September 18, 2008. Furthermore, high-temperature thermoformed webs may also be utilized in the methods of the present invention. Suitable thermoformed webs and suitable films comprised in suitable thermoformed webs are described in United States Provisional Patent Application No. 60/973,963, filed on September 20, 2007, and Unites States Patent Application No. 12/233,204, filed on September 18, 2008.

The high-temperature cook-in bag 10 utilized in certain embodiments of the present invention may also be readily heat sealed on conventional heat seal equipment that exists in meat packing plants. Furthermore, the high-temperature cook-in bag 10 may have better tear strength and puncture resistance than the traditional cook-in bags, and may be frozen and shipped with improved tear strength and puncture resistance. The high-temperature cook-in bag 10 may also have improved gas and/or moisture barrier properties over conventional cook-in bags.

The film for the high-temperature cook-in bag 10 may be produced using any technology known to one skilled in the art of high-temperature cook-in bag production. Suitable technologies include blown film technology (both mono-layer and co-extrusion), cast film technology (both mono-layer and co-extrusion), or biaxial orientation (double-bubble or tenter frame, mono-layer or co-extrusion). The film can be either shrink or non-shrink. Typical film thickness may be from about 1 mil to about 6 mils. Preferably, film thickness may be from about 3 mils to about 4 mils.

The high-temperature films employed in the present invention may have an interior surface and an exterior surface. The interior surface is the portion of the high-temperature film that is in contact with the ribbed meat product. The exterior surface is the outside of the high-temperature film. Preferably the interior surface is comprised of a composition that does not stick to meat.

Several materials may be used to construct high-temperature films for use in high-temperature cook-in bag 10 for rending ribbed meat products in reduced cooking cycles. Suitable materials may have one, if not more, of the following characteristics. These characteristics include: high melting point, can be readily heat sealed, good tear strength/puncture resistance, can withstand being frozen, shipped, etc., and good barrier properties, such as gas and/or moisture barrier properties. Suitable materials include polyester elastomer, polyamide elastomer, nylon, polyester, and polypropylene.

One characteristic for a suitable material is good barrier properties such as gas and moisture. As used herein, a material with a suitable gas barrier property has an oxygen barrier transmission coefficient of approximately 30 cc/ 24 hr/ 100 in2/ mil. Preferably, the oxygen barrier transmission coefficient is at least approximately 10 cc/ 24 hr/ 100 in2/ mil. As used herein, a material with a suitable moisture barrier property has a water vapor barrier transmission coefficient of approximately 40 g/ 24 hr/ 100 in2/ mil. Preferably, the water vapor barrier transmission coefficient is approximately 10 g/ 24 hr/ 100 in2/ mil.

Another characteristic for a suitable material is good tear strength. As used herein, a material with good tear strength has a tear strength greater than about 50 g/ mil. In a more preferred embodiment, a material with a good tear strength has a tear strength of greater than about 75 g/ mil. A suitable material may also have a good tensile yield strength. As used herein, a material with a good tensile yield strength has a tensile yield strength of greater than approximately 2,000 psi. Preferably, the tensile yield strength is greater than approximately 2,500 psi. In certain embodiments, the tear strength, puncture resistance, and tensile yield strengths of the film are improved through the combination of multiple layers in a multi-layer film.

A further characteristic for a suitable material is one that substantially does not adhere to ribbed meat products during or after the cooking of ribbed meat products. As used herein, substantially does not adhere to ribbed meat products may be defined as less than about 5% weight of the ribbed meat product sticking to the package.

Homopolymer nylon is a suitable material for a layer within a high-temperature multilayer film. Nylon has exceptional oxygen, carbon dioxide and nitrogen barrier properties. Accordingly, it can be used as a barrier layer in a film structure that will maintain a vacuum or could be used in a gas flush package.

Nylon can be used as a layer by itself, or can be blended with other materials to form a layer. Suitable materials that can be blended with nylon include, polyester, polyamide elastomer, and polyester elastomer. Suitable nylon includes AKULON®, AKULON® F136 C1 which is a nylon 6, ULTRAMID®, ULTRAMID B40 LN01 which is a nylon 6, BASF B40LN01, which is a nylon 6, ASCEND®, SOLUTIA 66J, which is a nylon 6,6 containing a heat stabilizer, and UTRAMID C33, which is a nylon 6,6/6 co-polymer. Further, various nylons may be blended together to form a blended monolayer. For example, nylon 6 may be blended with a heat stabilized nylon 6,6.

In certain embodiments, heat stabilizers may be added to the nylon to improve its heat stability. Although nylon has a relatively high melt point, approximately 423°F, without the addition of a heat stabilizer, nylon may become brown and brittle at temperatures higher than approximately 325°F. Suitable heat stabilizers may include copper salts such as copper iodide, copper bromide, and copper acetate.

When producing multi-layers films, it may be desirable to combine layers using a method that does not decrease the bags ability to be used for high-temperature cooking. A suitable method to accomplish this is through the use of a tie layer. A tie layer may be an intermediate layer between two layers of dissimilar materials. The tie layer may be comprised of materials of the layers in which it is between. This composition facilitates good adhesion of the layers because each layer is attached to a layer comprised, at least in part, of like materials. For example, to join a polyester layer with a nylon layer, a tie layer comprising a polyester elastomer blended with nylon would be suitable.

In certain embodiments, layers comprise a blend of a base material, such as polyester or nylon, with an elastomeric material such as polyester elastomer or polyamide elastomer. Preferably, the percentage of base material in a layer is at least about 75% (by weight). In other embodiments, the percentage of base material in a layer is at least about 80% (by weight). In other embodiments, the percentage of base material in a layer is at least about 90% (by weight).

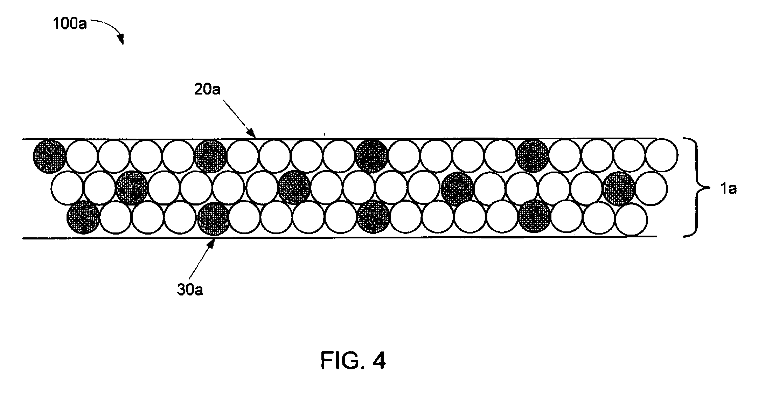

FIG. 4 is a cross-sectional view of an exemplary high-temperature film 100a for a high-temperature cook-in bag 10 which is not part of the present invention. As shown, the film 100a may include a blended monolayer la with an exterior 20a and an interior 30a. The blended monolayer film 100a may comprise a blend of nylon 6 and heat stabilized nylon 6,6. In certain embodiments, the blended monolayer film 100a may comprise from between about 60% and about 80% nylon 6 and from about 20% to about 40% heat stabilized nylon 6,6. Preferably, the blended monolayer film 100a may comprise about 80% nylon 6 and about 20% heat stabilized nylon 6,6. The blended monolayer film 100a has several advantages over traditional monolayer films. For example, the nylon blend has superior oxygen barrier properties providing improved shelf life of the ribbed meat product 300. Further, the blended monolayer film 100a is very durable and has suitable tear and puncture resistance to withstand shipping/storing applications. Most notably, however, is the ability of the blended monolayer film 100a to withstand high-temperatures. For example, the blended monolayer film 100a may withstand temperatures greater than about 350°F, and for example, temperatures greater than about 400°F.

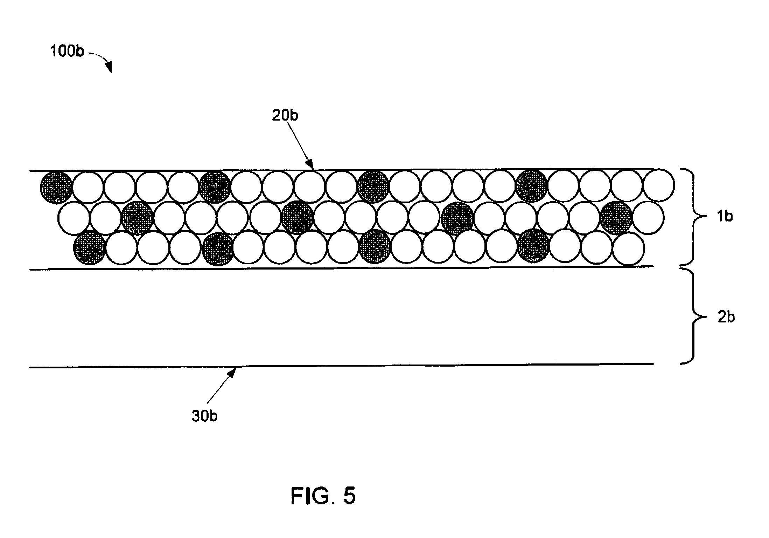

FIG. 5 is a cross-sectional view of an exemplary multilayer film 100b that may be used in the formation of the high-temperature cook-in bag 10 of the present invention. The multilayer film 100b may comprise an exterior 20b and an interior 30b. FIG. 5 shows a two layer structure, i.e., an outer layer 1b and an inner layer 2b. The outer layer I b of the film 100b (outside of the bag) may be a blend of two materials. Suitable materials for the outer layer 1b include a polyester blended with either polyester elastomer or polyamide elastomer. Suitable materials for the inner layer 2b (inside of the bag) include a polyester elastomer or polyamide elastomer.

There are several advantages to the film structure shown in FIG. 5. First, because the inner layer 2b of the bag 10 is a polyester or polyamide elastomer, it will not stick or have reduced adhesion to meat proteins during cooking. Also, the elastomer content provides good puncture resistance. Furthermore, the polyester provides suitable moisture barrier properties. Finally, the polyester may be oriented. Orientation provides additional benefits including increased tear resistance and puncture resistance along with the ability for the bag to be shrinkable.

Other suitable materials for the outer layer 1b include nylon blended with a polyester elastomer or polyamide elastomer. The benefits of this type of layer is that the outer layer 1b possesses some of the beneficial characteristics of a nylon layer, e.g., good gas barrier properties, and some of the beneficial characteristics of a polyester elastomer or polyamide elastomer layer, e.g., good flexibility. Furthermore, the polyester elastomer in the polyester elastomer/nylon blend of the outer layer 1b has an affinity for the polyester elastomer inner layer 2b. Suitable amounts of polyester elastomer in the outer layer are less than about 25% (by weight). Preferably, the amount of polyester elastomer is less than about 20% (by weight).

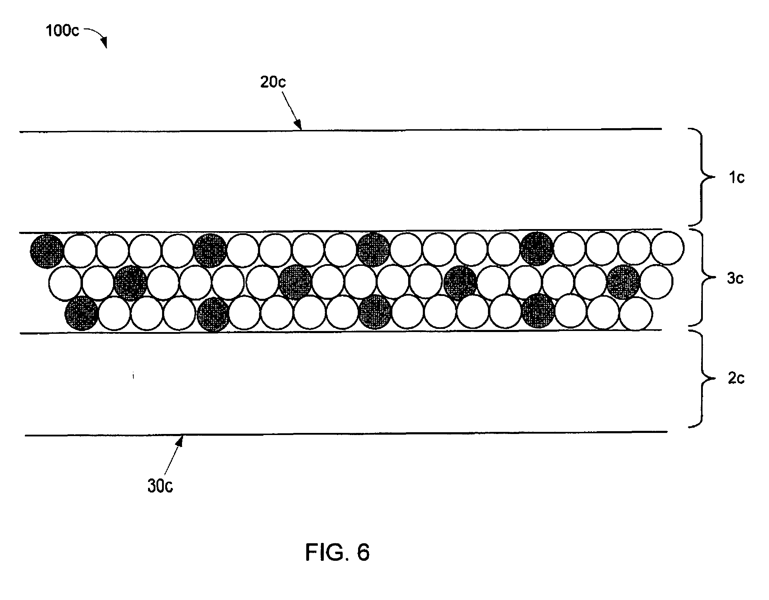

FIG. 6 is a cross-sectional view of an exemplary multilayer film 100c that may be used in the formation of the high-temperature cook-in bag 10. The multilayer film 100c may comprise an exterior 20c and an interior 30c. FIG. 6 shows a three layer structure comprising an outer layer 1c, an inner layer 2c, and a middle layer 3c. Suitable materials for the outer layer I c include polyester elastomer, polyamide elastomer, or nylon. Suitable materials for the inner layer 2c include polyester elastomer or polyamide elastomer. Suitable materials for the middle layer 3c include a polyester blended with a polyester elastomer or a polyamide elastomer; or a nylon blended with a polyester elastomer or polyamide elastomer.

In one embodiment, the high-temperature cook-in bag 10 may be comprised of the film 100c wherein the outer layer 1c comprises a polyester elastomer or polyamide elastomer, the inner layer 2c comprises a polyester elastomer or polyamide elastomer, and the middle 3c layer comprises a polyester blended with a polyester elastomer or polyamide elastomer. The middle layer 3c in this embodiment may serve as a tie layer between the outer layer 1c and inner layer 2c. Benefits include good moisture barrier properties due to the presence of polyester in the film 100c, reduced adhesion of meat products to the bag 10 due to polyester elastomer or polyamide elastomer as an inner layer, and increased flexibility and durability because of the polyester elastomer layers.

In another embodiment, the high-temperature cook-in bag 10 may be comprised of the film 100c wherein the outer layer 1c comprises nylon, the inner layer 2c comprises a polyester elastomer or polyamide elastomer, and the middle layer 3c comprises a nylon blended with a polyester elastomer or polyamide elastomer. The middle layer 3c in this embodiment may serve as a tie layer between the outer layer 1c and inner layer 2c. The benefits of this structure include superior gas barrier properties due to the 100% nylon outer layer 1c, improved heat seal qualities due to polyester elastomer or polyamide elastomer as the inner layer 2c, reduced adhesion of meat products to the bag due to polyester elastomer or polyamide elastomer as the inner layer 2c, and improved bone puncture resistance due to the presence of polyester elastomer and polyamide elastomer in the film 100c.

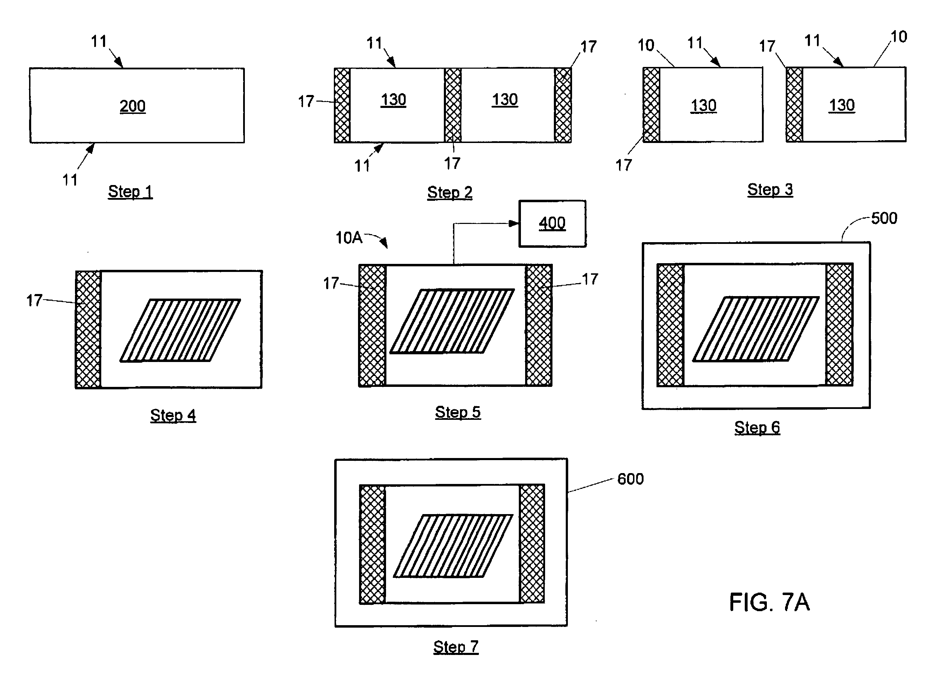

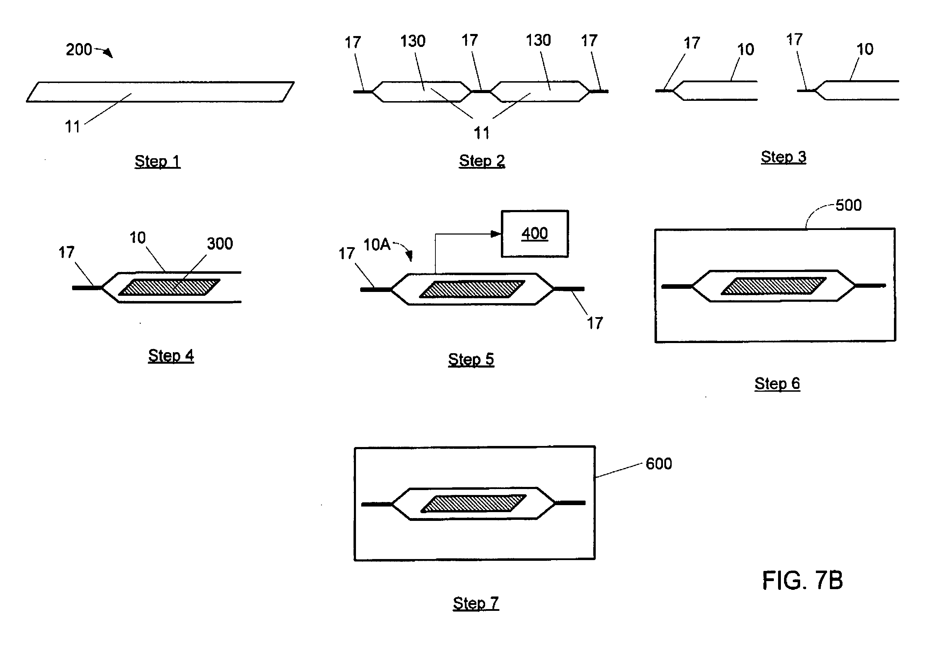

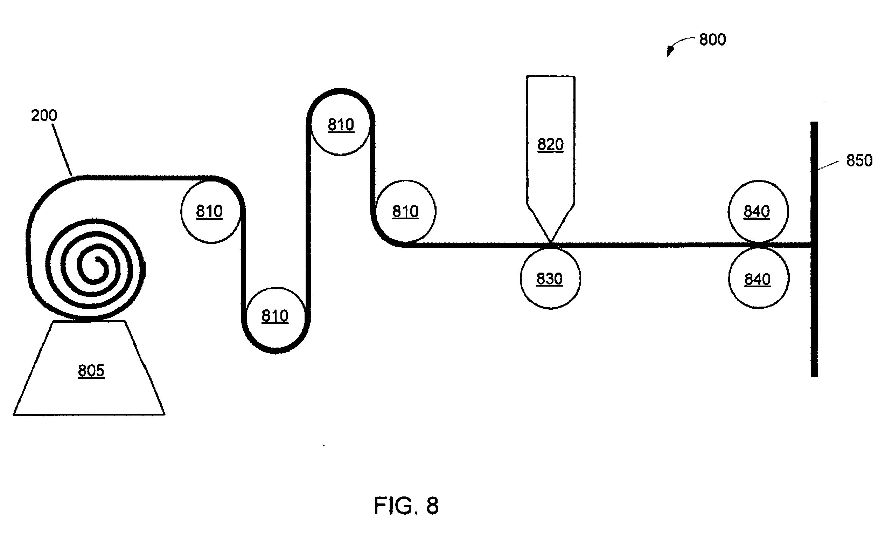

FIGs. 7A and 7B are top and side views, respectively, of an exemplary process for preparing a ribbed meat product. As shown in FIGs. 7A and 7B, the high-temperature cook-in bag 10 may be manufactured from a sheet of film tube 200 - Step 1. The film tube 200 may be in the form of a roll that can be unrolled across a bag machine 800 (see FIG 8.) to produce high-temperature cook-in bags 10 utilized in the present invention. The film tube 200 may be unrolled on an unwind stand 805. The film tube 200 may be subsequently rolled through dancer rolls 810 to control the tension of the film tube roll as it moves along the bag machine 800. Individual compartments 130 may be formed from the film tube roll 200 using various methods to produce the seal 17 -Step 2. Suitable methods to seal the film tube roll 200 are known to one skilled in the art and may include heat sealing, and ultrasonic welding, among others. In this embodiment, the seals 17 are formed by heat sealing using a heated seal bar 820. The heat seal bar 820 melts the tubing by pressing the film tube against a rubber roller 830. As the film tube progresses down the bag machine via nip rolls 840, the film tube 200 with the seals is subsequently cut 850 in a manner where the seal is only at the bottom of the bag 10 and the top portion of the bag 10 contains an opening. The resultant high-temperature bag 10 for rending ribbed meat products 300 in a reduced cook cycle can be seen in FIGs. 2A and 2B.

Once the bags 10 are formed, the ribbed meat product 300 may be placed into the cook-in bag 10 - Step 4 (see also FIGs. 3A and 3B). Suitable ribbed meat products 300 are described herein and may be either cooked or uncooked when they are insert into the cook-in bag 10. Further, the ribbed meat products 300 may be prepared prior to placement into the bag 10. For example, the meat products 300 may be tenderized, seasoned, sauced, or any combination thereof. Also, various amounts of meat products 300 may be included into one bag 10. Depending upon the application, one or more ribbed meat products 300 may be placed into the bag 10. In one embodiment, two ribbed meat products 300 are placed within the bag 10. In another embodiment, three ribbed meat products 300 are placed within the bag 10. As such, the size of the bag 10 may vary depending upon the application.

For example, to prepare a single riblet, a suitable high-temperature cooking bag 10 may have a size of approximately 2 inches by 8 inches. To prepare a bone in pork shoulder or ham, a suitable high-temperature cooking bag 10 may have a size of approximately 16 inches by 30 inches. In one embodiment, a short rack of baby back ribs may be prepared in a high-temperature cook-in bag 10 with an approximate size of about 6 inches by 20 inches. In other embodiments, the size of the bag 10 is about 7 inches by 24 inches, or for example, about 9 inches by 28 inches. Preferably, the size of the bag 10 is suitable to contain at least one rack of ribs. In some embodiments, the bag 10 is suitable to contain at least two racks of ribs. In another embodiment, the size of the bag 10 is suitable to contain at least three racks of ribs.

After the ribbed meat product 300 is placed inside the bag 10, air may optionally be evacuated 400 from the cook-in bag 10 and the bag 10 may be closed by, for example sealing the bag closed - Step 5 (see seal 17). Air may be evacuated from the interior of cook-in bag 10 using conventional methods known to one skilled in the art (e.g., a vacuum). Further, the cook-in bag 10 may be sealed using conventional methods known to one skilled in the art. For example, the cook-in bag 10 may be sealed using a heat sealing technique. The resultant product is a contained package 10A (see FIGs. 1A-1C). Preferably, the bag 10 is hermetically and/or vacuum sealed to increase the shelf-life of the ribbed meat product 300. Maintaining a vacuum within the sealed cook-in bag 10 helps ensure that there is none or only a negligible amount of free oxygen in the cook-in bag 10 and a hermetic seal helps ensure that no or a negligible amount of oxygen may enter the cook-in bag 10 during shipping and storage. Further, the films utilized to produce the high-temperature cook-in bags 10 of the present invention have very low oxygen transmission coefficients. Thus, an oxygen barrier is provided with this contained package 10A to increase shelf life of the ribbed meat product 300.

In one embodiment, formation of the contained package 10A occurs at a processing facility. Once the contained package 10A is formed, the package 10A may subsequently be transported to another facility, such as a retail market. The films used to produce the bags 10 of the present invention provide for a durable bag with increased puncture/tear resistance. These durable bags 10 are able to withstand the rigor of transport. Further, the contained package 10A containing the ribbed meat product 300 may be frozen or refrigerated in a freezer/refrigerator 500 - Step 6. This may occur either before or after transport. The frozen/refrigerated contained package 10A may subsequently be placed directly into a high-temperature heating apparatus 600 - Step 7. Suitable high-temperature heating apparatuses 600 include ovens, microwaves, convection ovens, steam and pressure cookers, slow cookers, smoke houses, and vessels containing heat water, among others. Alternatively, the frozen/refrigerated contained package 10A may be removed from the freezer or refrigerator and may be defrosted in a microwave prior to being placed into a high-temperature heating apparatus 600. Advantageously, embodiments of the present invention allow for the ribbed meat product 300 to be sealed in a high-temperature cook-in bag 10 to form a contained package 10A, frozen or refrigerated 500 in that same contained package 10A, and placed into a high-temperature heating apparatus 600 in that same contained package 10A.

If the ribbed meat product 300 is cooked prior to placement into the high-temperature cook-in bag 10, the various benefits of the present invention still apply, however, rather than the ribbed meat product 300 being cooked within the contained package 10A, the cooked ribbed meat product 300 may be rethermalized within the contained package 10A. Rethermalizing the ribbed meat product 300 according the methods of the present invention reduces the time required to accomplish the rethermalizing due to the ability to apply a high-temperature, i.e., greater than 350°F. Further, because the ribbed meat product 300 is contained within the cook-in bag 10, the ribbed meat product 300 stays moist and will not dry out. Further, the high-temperature cook-in bags 10 of the present invention provide for an oxygen barrier, a hermetic seal, a vacuum seal or a combination thereof which improves the shelf-life of the ribbed meat product 300 as discussed herein.

In another embodiment of the present invention, the placement of the ribbed meat product 300 into the high-temperature cook-in bag 10 is performed after the ribbed meat product 300 has been shipped by the meat processor. This placement may be performed, for example, in a residential kitchen, in a restaurant, in a cafeteria, etc. In this embodiment, high-temperature cook-in bags 10 may be prepared using methods as discussed above. The ribbed meat product 300 may be placed into the high-temperature cook-in bag 10 prior to being placed directly into the high-temperature heating apparatus 600. Suitable high-temperature heating apparatuses 600 include ovens, microwaves, convection ovens, steam and pressure cookers, slow cookers, smoke houses, and vessels containing heat water, among others. The ribbed meat product 300 may also be placed into the high-temperature cook-in bag 10 and may subsequently be frozen/refrigerated. Following the freezing/refrigeration process, the high-temperature cook-in bags 10 containing the ribbed meat product 300 may be placed directly into a high-temperature heating apparatus 600.

The high-temperature cook-in bag 10 may include a closure system to provide for a sufficient seal to contain the juices of the ribbed meat product 300 within the cook-in bag. The closure system is preferably suitable for high-temperature applications. For example, the closure system may include a flap portion combined with an adhesive wherein the flap portion may be folded over the opening 15 in the bag 10 and the adhesive closes and seals the bag opening. The adhesive may be disposed on the flap portion and/or the portion of the bag opposite the flap where the flap portion folds over. The adhesive may be covered by a non-adhesive covering (e.g. tape) that covers and protects the adhesive prior to use.

Alternatively, the oven bag closure system may include a high-temperature zip lock closure or "slider" closure substantially near the top open end of the bag 10. Such a closure may be made out of a material such as nylon or polyester. In another example, the closure bag system may include high-temperature snap fasteners substantially near the top open end 15 of the bag 10. Such snap fasteners may be welded on to a lip of the bag 10. The snaps may be made using well-known techniques in the art, such as injection molding the snaps out of nylon or polyester, for example.

There are several advantages to this embodiment over the current art. For example, this embodiment allows for ribbed meat products 300 to be cooked in situations that were not possible prior to this invention. Previously, cooking ribbed meat products 300 at large functions was impractical due to the slow cook times. This invention, however, allows for consumers such as cafeterias, banquet facilities, and catering facilities, to prepare large quantities of ribbed meat products 300. This is provided, in part, because of the shorter cook times provided by the present invention. The consumer may simply purchase the ribbed meat products 300, place the ribbed meat products 300 into the high-temperature cooking bags 10, and render the ribbed meat products 300 in a reduced cook cycle.

## Claims

1. A method for preparing a bone in meat product for a cook cycle, the method comprising:
placing the bone in meat product into a high-temperature cook-in bag comprising a multilayer film,
wherein the film is configured to be exposed to a temperature of at least 350°F(177°C) during the cook cycle; and wherein the film comprises at least an inner layer which does not substantially adhere to the bone-in meat product and which consists of a polyester elastomer or a polyamide elastomer;
sealing the high-temperature cook-in bag to form a package that includes the bone in meat product,
wherein the film includes an oxygen barrier for maintaining a vacuum seal within the package,
wherein the film has an oxygen barrier transmission coefficient equal to, or less than, 30cc/24hr/100in²/mil (30cm³/24h/645cm²/25.4µm) and a water vapor barrier transmission coefficient equal to, or less than,40g/24hr/100in²/mil (40g/24h/645cm²/25.4µm).

2. The method of claim 1, wherein the multilayer film further comprises an outer layer and a tie layer disposed between the outer and inner layers,
wherein the outer layer includes a polyester elastomer, a polyamide elastomer, or a nylon, and
wherein the tie layer includes at least 75% nylon or polyester blended with a polyester elastomer or a polyamide elastomer.

3. The method of claim 1 or 2, further comprising cooking or rendering the bone in meat product prior to placing the bone-in meat product in the high-temperature cook-in bag.

4. The method of claim 1 or 3, further comprising tenderizing, seasoning, or marinating the bone in meat product prior to placing the bone in meat product into the high-temperature cook-in bag.

5. The method of any of claims 1 to 4, wherein sealing the high-temperature cook-in bag includes evacuating air from the high-temperature cook-in bag and hermetically sealing the high-temperature cook-in bag.

6. A contained package for preparing a ribbed meat product in a reduced cook cycle, the contained package comprising:
a high-temperature cook-in bag comprising a multilayer film configured to be exposed to a temperature of at least 350°F (177°C) during the reduced cook cycle, wherein the film has an oxygen barrier transmission coefficient equal to, or less than, 30 cc/24hr/100 in²/mil (30cm³/24h/645cm²/25.4µm) and a water vapor barrier transmission coefficient equal to, or less than, 40g/24hr/100in²/mil (40g/24h/645cm²/25.4µm), wherein the multilayer film comprises at least an inner layer which does not substantially adhere to the bone-in meat product and which consists of a polyester elastomer or a polyamide elastomer; and
a ribbed meat product sealed within the high-temperature cook-in bag.

7. The method or contained package of any of claims 1 to 6, wherein the multilayer film further comprises an outer layer,
wherein the outer layer includes at least 75% nylon or polyester blended with a polyester elastomer or a polyamide elastomer.

8. The method or contained package of any of claims 1 to 7, wherein the multi-layered film further comprises an outer layer and a tie layer disposed
between the outer and inner layers,
wherein the tie layer includes at least a portion of the materials in the inner and outer layers.

9. The method or contained package of any of claims 1 to 8, wherein the film has a thickness in a range of 1 mil (0,0254 mm) to 6 mils (0,152 mm).

10. The method or contained package of any of claims 1 to 9, wherein the film has a tear strength greater than 50g/mil (2g/µm), and a tensile yield strength of greater than 2,000 psi (13.8 MPa).

11. The contained package of any of claims 6 to 10, wherein the ribbed meat product is pre-cooked or pre-rendered.

12. The contained package of any of claims 6 to 11, wherein the ribbed meat product is hermetically sealed within the high-temperature cook-in bag.

13. The method or contained package of any of claims 1 to 12, wherein the contained package is configured to be placed directly into a high temperature cooking apparatus.

14. The method or contained package of any of claims 1 to 13, wherein the contained package is configured to be refrigerated or frozen the package.

## Patentansprüche

1. Verfahren zur Zubereitung eines Fleischprodukts mit Knochen für einen Kochablauf, wobei das Verfahren umfasst:
Platzieren des Fleischprodukts mit Knochen in einem Hochtemperatur-Kochbeutel umfassend einen Mehrschicht-Film,
wobei der Film ausgebildet ist während eines Kochablaufs einer Temperatur von mindestens 350°F (177°C) ausgesetzt zu werden; und wobei der Film zumindest eine innere Schicht umfasst, die nicht wesentlich an dem Fleischprodukt mit Knochen anhaftet und die aus einem Polyesterelastomer oder einem Polyamidelastomer besteht;
Versiegeln des Hochtemperatur-Kochbeutels, um eine Einheit auszubilden, die das Fleischprodukt mit Knochen beinhaltet,
wobei der Film eine Sauerstoffbarriere zur Aufrechterhaltung einer hermetischen Versiegelung innerhalb der Einheit beinhaltet, und
wobei der Film einen Sauerstoffbarrieren-Transmissionskoeffizient gleich oder kleiner als 30 cc/24 hr/100 in²/mil (30 cm³/24 h/645 cm²/25,4 µm) und einen Wasserdampfbarrieren-Transmissionskoeffizient gleich oder kleiner als 40 g/24 hr/100 in²/mil (40 g/24 h/645 cm²/25,4 µm) besitzt.

2. Verfahren nach Anspruch 1, wobei der Mehrschicht-Film weiterhin eine äußere Schicht und eine Haftvermittlerschicht umfasst, die zwischen der inneren Schicht und der äußeren Schicht angeordnet ist,
wobei die äußere Schicht ein Polyesterelastomer, ein Polyamidelastomer oder ein Nylon beinhaltet, und
wobei die Haftvermittlerschicht zumindest 75% Nylon oder Polyester gemischt mit einem Polyesterelastomer oder einem Polyamidelastomer beinhaltet.

3. Verfahren nach Anspruch 1 oder 2, weiterhin umfassend ein Kochen oder Bearbeiten des Fleischprodukts mit Knochen vor dem Platzieren des Fleischprodukts mit Knochen in dem Hochtemperatur-Kochbeutel.

4. Verfahren nach Anspruch 1 oder 3, weiterhin umfassend Zartmachen, Würzen oder Marinieren des Fleischprodukts mit Knochen vor dem Platzieren des Fleischprodukts mit Knochen in dem Hochtemperatur-Kochbeutel.

5. Verfahren nach einem der Ansprüche 1 bis 4, wobei das Versiegeln des Hochtemperatur-Kochbeutels ein Evakuieren von Luft aus dem Hochtemperatur-Kochbeutel und ein hermetisches Versiegeln des Hochtemperatur-Kochbeutels beinhaltet.

6. Geschlossene Einheit zur Zubereitung eines Rippenfleisch-Produkts in einem reduzierten Kochablauf, wobei die geschlossene Einheit umfasst:
einen Hochtemperatur-Kochbeutel umfassend einen Mehrschicht-Film, der eingerichtet ist während des reduzierten Kochablaufs einer Temperatur von wenigstens 350°F (177°C) ausgesetzt zu werden, wobei der Film einen Sauerstoffbarrieren-Transmissionskoeffizient gleich oder kleiner als 30 cc/24 h/100 in²/mil (30 cm³/24 h/645 cm² /25,4 µm) und einen Wasserdampfbarrieren-Transmissionskoeffizient gleich oder kleiner als 40 g/24 h/100 in²/mil (40 g/24 h/645 cm²/25,4 µm) besitzt, wobei der Mehrschicht-Film zumindest eine innere Schicht umfasst, welche nicht wesentlich an dem Fleischprodukt mit Knochen anhaftet und welche aus einem Polyesterelastomer oder einem Polyamidelastomer besteht; und
ein Rippenfleisch-Produkt, welches in dem Hochtemperatur-Kochbeutel versiegelt ist.

7. Verfahren oder geschlossene Einheit nach einem der Ansprüche 1 bis 6, wobei der Multischicht-Film weiterhin eine äußere Schicht umfasst,
wobei die äußere Schicht zumindest 75% Nylon oder Polyester gemischt mit einem Polyesterelastomer oder einem Polyamidelastomer beinhaltet.

8. Verfahren oder geschlossene Einheit nach einem der Ansprüche 1 bis 7, wobei der Mehrschicht-Film weiterhin eine äußere Schicht und eine Haftvermittlerschicht umfasst, die zwischen den äußeren und inneren Schichten angeordnet ist,
wobei die Haftvermittlerschicht zumindest einen Anteil des Materials der inneren und der äußeren Schichten beinhaltet.

9. Verfahren oder geschlossene Einheit nach einem der Ansprüche 1 bis 8, wobei der Film eine Dicke im Bereich zwischen 1 mil (0,0254 mm) bis 6 mils (0,152 mm) besitzt.

10. Verfahren oder geschlossene Einheit nach einem der Ansprüche 1 bis 9, wobei der Film eine Reißfestigkeit größer als 50 g/mil (2 g/µm) und eine Zugfestigkeit von mehr als 2000 psi (13,8 MPa) besitzt.

11. Geschlossene Einheit nach einem der Ansprüche 6 bis 10, wobei das Rippenfleisch-Produkt vorgekocht oder vorbearbeitet ist.

12. Geschlossene Einheit nach einem der Ansprüche 6 bis 11, wobei das Rippenfleisch-Produkt innerhalb des Hochtemperatur-Kochbeutels hermetisch versiegelt ist.

13. Verfahren oder geschlossene Einheit nach einem der Ansprüche 1 bis 12, wobei die geschlossene Einheit ausgebildet ist direkt in einer Hochtemperatur-Kochvorrichtung platziert zu werden.

14. Verfahren oder geschlossene Einheit nach einem der Ansprüche 1 bis 13, wobei die geschlossene Einheit zum Einfrieren oder Frieren der Einheit eingerichtet ist.

## Revendications

1. Procédé destiné à préparer un produit de viande avec os pour un cycle de cuisson, le procédé comprenant les étapes pour :
placer le produit de viande avec os dans un sac de cuisson à haute température comprenant un film multicouche,
dans lequel le film est configuré de manière à être exposé à une température d'au moins 350 °F (177 °C) durant le cycle de cuisson, et dans lequel le film comprend au moins une couche intérieure qui en grande partie n'adhère pas au produit de viande avec os et consiste en un élastomère de polyester ou un élastomère de polyamide ;
fermer le sac de cuisson à haute température afin de former un conditionnement qui inclut le produit de viande avec os,
dans lequel le film inclut une barrière à l'oxygène destinée à maintenir un joint hermétique à l'intérieur du conditionnement,
dans lequel le film présente un coefficient de transmission dans le cas d'une barrière à l'oxygène inférieur ou égal à 30 cc/24 h/ 100 in²(pouces)/mil (30 cm³/24 h/645 cm²/25,4 µm) et un coefficient de transmission dans le cas d'une barrière à la vapeur d'eau inférieur ou égal à 40 g/24 h/ 100 in²(pouces)/mil (40 g/24 h/645 cm²/25,4 µm).

2. Procédé selon la revendication 1, dans lequel le film multicouche comprend en outre une couche extérieure et une couche formant lien disposée entre les couches intérieure et extérieure,
dans lequel la couche extérieure inclut un élastomère de polyester, un élastomère de polyamide, ou un nylon, et
dans lequel la couche formant lien inclut au moins 75% de nylon ou un polyester mélangé à un élastomère de polyester ou un élastomère de polyamide.

3. Procédé selon la revendication 1 ou 2, comprenant en outre la cuisson ou la fonte du produit de viande avec os avant de placer le produit de viande avec os dans le sac de cuisson à haute température.

4. Procédé selon la revendication 1 ou 3, comprenant en outre l'attendrissage, l'assaisonnement, ou la préparation en marinade du produit de viande avec os avant de placer le produit de viande avec os dans le sac de cuisson à haute température.

5. Procédé selon l'une quelconque des revendications 1 à 4, dans lequel la fermeture du sac de cuisson à haute température inclut l'évacuation de l'air hors du sac de cuisson à haute température et la fermeture hermétique du sac de cuisson à haute température.

6. Conditionnement fermé destiné à préparer un produit de viande à côtes au cours d'un cycle de cuisson réduit, le conditionnement fermé comprenant :
un sac de cuisson à haute température comprenant un film multicouche configuré de manière à être exposé à une température d'au moins 350 °F (177 °C) durant le cycle de cuisson réduit, et dans lequel le film présente un coefficient de transmission dans le cas d'une barrière à l'oxygène inférieur ou égal à 30 cc/24 h/ 100 in²(pouces)/mil (30 cm³/24 h/645 cm²/25,4 µm) et un coefficient de transmission dans le cas d'une barrière à la vapeur d'eau inférieur ou égal à 40 g/24 h/ 100 in²(pouces)/mil (40 g/24 h/645 cm²/25,4 µm), et dans lequel le film multicouche comprend au moins une couche intérieure qui en grande partie n'adhère pas au produit de viande avec os et consiste en un élastomère de polyester ou un élastomère de polyamide, et
un produit de viande à côtes enfermé à l'intérieur du sac de cuisson à haute température.

7. Procédé ou conditionnement fermé selon l'une quelconque des revendications 1 à 6, dans lequel le film multicouche comprend en outre une couche extérieure, et
dans lequel la couche extérieure inclut au moins 75% de nylon ou un polyester mélangé à un élastomère de polyester ou un élastomère de polyamide.

8. Procédé ou conditionnement fermé selon l'une quelconque des revendications 1 à 7, dans lequel le film multicouche comprend en outre une couche extérieure et une couche formant lien disposée entre les couches intérieure et extérieure,
dans lequel la couche formant lien inclut au moins une partie des matériaux dans les couches intérieure et extérieure.

9. Procédé ou conditionnement fermé selon l'une quelconque des revendications 1 à 8, dans lequel le film présente une épaisseur comprise dans un intervalle allant de 1 mil (0,0254 mm) à 6 mil (0,152 mm).

10. Procédé ou conditionnement fermé selon l'une quelconque des revendications 1 à 9, dans lequel le film présente une résistance à la déchirure supérieure à 50 g/mil (2 g/µm) et une limite de résistance à la traction supérieure à 2000 psi (13,8 MPa).

11. Conditionnement fermé selon l'une quelconque des revendications 6 à 10, dans lequel le produit de viande à côtes est précuit ou subi un attendrissage préalable.

12. Conditionnement fermé selon l'une quelconque des revendications 6 à 11, dans lequel le produit de viande à côtes est enfermé hermétiquement à l'intérieur du sac de cuisson à haute température.

13. Procédé ou conditionnement fermé selon l'une quelconque des revendications 1 à 12, dans lequel le conditionnement fermé est configuré de manière à être directement placé dans un appareil de cuisson à haute température.

14. Procédé ou conditionnement fermé selon l'une quelconque des revendications 1 à 13, dans lequel le conditionnement fermé est configuré pour être un conditionnement réfrigéré ou congelé.
